# EUROPÄISCHE PATENTSCHRIFT

(11) **EP 0 867 992 B1**
(45) Veröffentlichungstag und Bekanntmachung des Hinweises auf die Patenterteilung: **30.06.2004**
(21) Anmeldenummer: 98102484.7
(22) Anmeldetag: 13.02.1998
(51) Int. Cl.: H02B 1/01, H02B 1/32

(54) **Vorrichtung zum Befestigen einer Tragschiene an Rahmenschenkeln und Montageplatten eines Schaltschrankes**
Device for fixing mounting rail on frame members and mounting plates in switch cabinet
Dispositif pour fixer un rail support sur les montants et platines de montage d'armoires de distribution

(30) Priorität: 25.03.1997 DE 19712362
(43) Veröffentlichungstag der Anmeldung: 30.09.1998
(73) Patentinhaber: Rittal-Werk Rudolf Loh GmbH & Co. KG, 35745 Herborn (DE)
(72) Erfinder: Zachrai, Jürgen, 35690 Dillenburg (DE)
(74) Vertreter: Fleck, Hermann-Josef, Dr.-Ing.

(56) Entgegenhaltungen:
- EP-A- 0 012 209
- DE-A- 2 746 545
- FR-A- 2 535 146

## Beschreibung

Die Erfindung betrifft einen Schaltschrank mit einer Vorrichtung zum Befestigen einer Tragschiene an Rahmenschenkeln und/oder Montageplatten, bei der die Rahmenschenkel zwei senkrecht zueinander stehende Befestigungsseiten mit jeweils einer Reihe von Befestigungsdurchbrüchen aufweisen und die Montageplatte im Bereich einer Seitenkante eine Reihe von Befestigungsdurchbrüchen und einen abgekanteten Haltesteg aufweisen und bei der die Tragschiene an beiden Enden mit Befestigungselementen versehen ist, die zur Verbindung mit einem Rahmenschenkel oder einer Montageplatte dienen.

Bei bekannten Vorrichtungen dieser Art werden in die Befestigungsdurchbrüche spezielle Einklipsmuttern eingebracht und die mit Befestigungsbohrungen versehenen Enden der Tragschiene mit diesen Einklipsmuttern verschraubt. Neben den speziell ausgebildeten Befestigungselementen erfordert diese Vorrichtung einen beachtlichen Montageaufwand. Die Montage wird oft dadurch erschwert, daß die Tragschiene bereits schon mit Bauelementen oder Baugruppen bestückt ist. Außerdem ist in manchen Fällen die hergestellte Verbindung zwischen Tragschiene und Rahmenschenkel oder Montageplatte nicht ausreichend stabil.

Aus der EP 0 012 209 A1 ist ein Schaltschrank mit einem Rahmengestell bekannt. Das Rahmengestell weist vertikale Rahmenprofile auf. Diese Rahmenprofile sind mit Reihen von Befestigungsaufnahmen versehen. An das Rahmengestell können Führungsschienen angebaut werden. Die Führungsschienen weisen ausgestanzte Hakenelemente auf, die in die Befestigungsaufnahmen der Rahmenprofile eingehangen werden können.

Die DE 27 46 545 A1 beschreibt ein Traggestell, das aus vertikalen und horizontalen Rahmenprofilen zusammengesetzt ist. Die Rahmenprofile sind dabei an ihren längsseitigen Enden verschraubt.

Aus der FR 2 535 146 ist ein Schaltschrank bekannt, an dessen Rahmengestell Winkelhalter angeschraubt sind.

Es ist Aufgabe der Erfindung, eine Vorrichtung der eingangs erwähnten Art zu schaffen, die die Anbringung der Tragschiene an Rahmenschenkeln oder Montageplatten wesentlich erleichtert und zu einer stabilen Verbindung der Tragschiene mit den Rahmenschenkln oder Montageplatten führt.

Diese Aufgabe wird nach der Erfindung dadurch gelöst, daß die Befestigungselemente der Tragschiene als Einhängehaken ausgebildet sind, die in ihrer Breite an die Seitenlänge der im Querschnitt quadratischen Befestigungsdurchbrüche der Rahmenschenkel oder der Montageplatte angepaßt sind, in die Befestigungsdurchbrüche einführbar sind und den Rahmenschenkel oder die Montageplatte hintergreifen, daß jedem Ende der Tragschiene eine Spannplatte zugeordnet ist, die an einer Kante mit Haltekrallen versehen ist, daß diese Haltekrallen in Befestigungsdurchbrüche der senkrecht zu der belegten Rahmenschenkelseite stehenden Rahmenschenkelseite einführbar sind und diese hintergreifen oder den Haltesteg der Montageplatte hintergreifen, und daß die Spannplatte mit einer Gewindebohrung für eine Spannschraube versehen ist, mit der sie in einem in Längsrichtung der Tragschiene verlaufenden Langloch an der Tragschiene gehalten und in der Verbindungsstellung mit dieser verspannbar ist.

Die mit den Einhängehaken versehene Tragschiene kann in Befestigungsdurchbrüche der Rahmenschenkel und Montageplatten vorbereitend eingehängt werden, so daß der Monteur für die weiteren Montagearbeiten beide Hände frei hat. Die mit den Spannschrauben an der Tragschiene gehaltenen Spannplatten werden dann ebenfalls in Befestigungsdurchbrüche des Rahmenschenkels eingeführt oder hinter den Haltesteg der Montageplatte gebracht.

Die Langlöcher der in der Tragschiene lassen die Verstellung der Spannplatten an den Enden der Tragschiene zu. Werden die Spannschrauben angezogen, dann werden die Tragschiene und die Spannplatten gegeneinander verspannt, wobei die Tragschiene auf einer Befestigungsseite des Rahmenschenkels aufliegt und die Spannplatten mit ihren Haltekrallen in den Befestigungsdurchbrüchen der senkrecht dazu stehenden Befestigungsseite angreifen.

Werden Montageplatten verwendet, dann liegt die Tragschiene auf diesen auf und die Haltekrallen der Spannplatten stützen sich auf den Haltestegen ab. Die Tragschiene wird in jedem Fall eindeutig und mit ausreichender Stabilität an den Rahmenschenkeln und den Montageplatten festgespannt. Es sind keine speziellen Einklipsmuttern erforderlich, da die Befestigungsdurchbrüche nur die Einhängehaken der Tragschiene und die Haltekrallen der Spannplatten aufnehmen.

Ist nach einer Ausgestaltung vorgesehen, daß die Tragschiene mit einem Basisschenkel und zwei Seitenschenkeln im Querschnitt U-förmig ausgebildet ist und daß die Spannplatten mit einem Basisschenkel und zwei Seitenschenkeln im Querschnitt U-förmig gestaltet sind, eine Aufnahme für die Tragschiene bilden und in Längsrichtung an dieser verstellbar sind, dann lassen sich die an der Tragschiene gehaltenen Spannplatten so positioniert verschieben, daß die Haltekrallen die zum Einführen in Befestigungsdurchbrüche eines Rahmenschenkels oder zum Hintergreifen des Haltesteges einer Montageplatten richtige Stellung einnehmen. Damit dieses gewährleistet ist, wird nach einer Ausgestaltung die Auslegung so gewählt, daß die Befestigungsdurchbrüche in den beiden Befestigungsseiten der Rahmenschenkel in gleichem Abstand zu der von diesen gebildeten Rahmenkante angeordnet sind und daß die Breite des Haltesteges der Montageplatte diesem Abstand entspricht.

Ist die Ausgestaltung so vorgenommen, daß die Seitenschenkel der Tragschiene in senkrecht dazu abgekantete und gegeneinander gerichtete Halteschenkel auslaufen, dann lassen sich auf die Tragschiene in bekannter Weise elektrische Geräte mit entsprechend ausgebildetem Rastfuß aufrasten.

Damit die Spannplatten mit ihren Aufnahmeseiten auch großflächig an der zugekehrten Seite der Tragschiene verspannen, sieht eine Ausgestaltung vor, daß die Haltekrallen der U-förmigen Spannplatten an einer Stirnseite des Basisschenkels angebracht sind und daß die Haltekrallen entsprechend dem Abstand der Befestigungsdurchbrüche der Rahmenschenkel von der Rahmenkante und damit auch die Breite des Haltesteges der Montageplatte an dem Basisschenkel der Spannplatten abgebogen sind.

Die Vormontage der Tragschiene an den Rahmenschenkeln oder Montageplatte läßt sich nach einer Ausgestaltung dadurch verbessern, daß die Tragschiene und die Spannplatten in Querrichtung zur Tragschiene zwei Einhängehaken bzw. zwei Haltekrallen aufweisen, deren Abstand an die Teilung der Reihen von Befestigungsdurchbrüchen in den Rahmenschenkeln und Montageplatten angepaßt ist.

Die Verschiebung der Spannplatten an der Tragschiene wird dadurch erleichtert, daß die Spannplatten an der den Haltekrallen gegenüberliegenden Stirnseiten des Basisschenkels mit einem abgekanteten Bedienungssteg versehen sind.

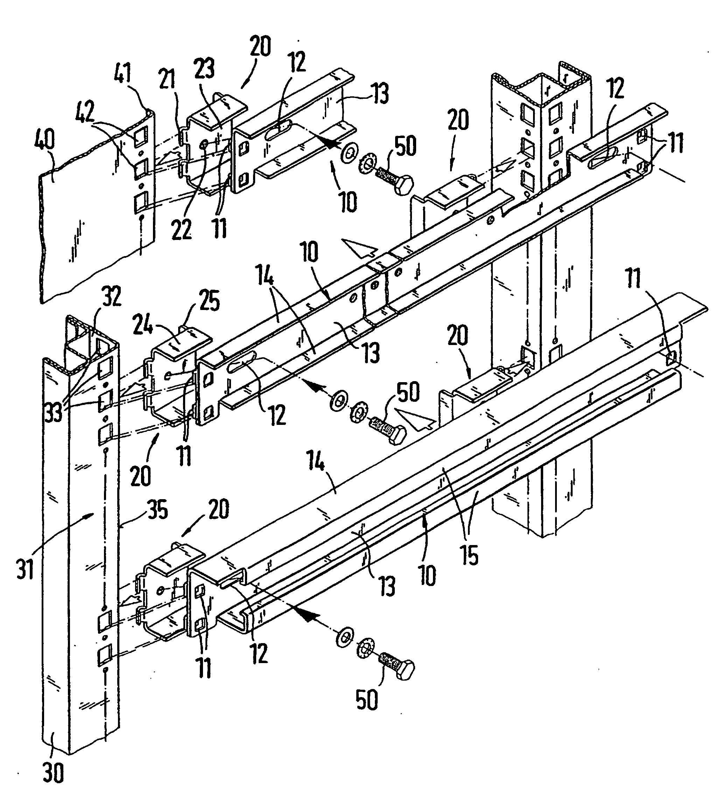

Die Erfindung wird anhand eines in der Zeichnung dargestellten Ausführungsbeispieles näher erläutert.

In der Zeichnung sind Tragschienen 10 zwischen zwei vertikal stehenden Rahmenschenkeln 30 zu befestigen. Dabei kann die Tragschiene 10 mit einem Basisschenkel 13 und zwei Seitenschenkel 14 U-förmigen Querschnitt aufweisen und mit Befestigungsaufnahmen, wie Bohrungen und Gewindebohrungen, versehen sein. Wie mit der unteren Tragschiene 10 gezeigt ist, können die Seitenschenkel 14 auch in gegeneinander gerichtete Halteschenkel 15 auslaufen, so daß die Tragschiene 10 als Rastschiene verwendet werden kann.

Die beiden Enden der Tragschienen 10 sind in jedem Fall identisch ausgebildet und weisen jeweils zwei ausgestanzte und nach hinten ausgebogene Einhängehaken 11 auf. Die Rahmenschenkel 30 weisen im Bereich einer Rahmenkante 35 in den beiden senkrecht aufeinanderstehenden Befestigungsseiten 31 und 32 eine Reihe von Befestigungsdurchbrüchen 33 auf. Diese Reihen von Befestigungsdurchbrüche 33 sind aufeinander ausgerichtet und in einheitlicher Teilung eingebracht und stehen in den beiden Befestigungsseiten 31 und 32 im gleichen Abstand zur Rahmenkante 35. Wie in der Zeichnung oben links angedeutet ist, können auch Montageplatten 40 verwendet werden, die mit einer identischen Reihe von Befestigungsdurchbrüchen 41 versehen ist, die in demselben Abstand zur Seitenkante der Montageplatte 40 stehen. An der Seitenkante der Montageplatte 40 ist ein Haltesteg 41 senkrecht abgekantet, dessen Breite dem Abstand der Befestigungsdurchbrüche 41 von der Seitenkante der Montageplatte 40 entspricht.

Die Einhängehaken 11 der Tragschiene 10 sind an die Seitenlänge der quadratischen Befestigungsdurchbrüche 33 und 41 angepaßt und im Abstand auf die Teilung der Reihen von Befestigungsdurchbrüchen 33 und 41 gebracht. Die Tragschiene 10 kann dann auf einfache Weise an den beabstandeten Rahmenschenkeln 30 oder Montageplatten 40 eingehängt werden. Die Einhängehaken 11 sind dabei so ausgelegt, daß sie in die Befestigungsdurchbrüche 33 und 41 einführbar sind und eingehängt werden können. In einer vorbereitenden Montagestellung läßt sich so die Tragschiene 10 bereits an den Rahmenschenkeln 30 oder den Montageschienen 40 anbringen.

In dem Basisschenkel 13 der Tragschiene 10 sind an beiden Enden längsgerichtete Langlöcher 12 angeordnet, durch die eine Spannschraube 50 geführt werden kann. Die Spannschraube 50 ist in die Gewindebohrung 22 einer Spannplatte 20 einschraubbar, die im Basisschenkel 23 der mit den Seitenschenkeln 24 ebenfalls U-förmig ausgebildeten Spannplatte 20 eingebracht ist. Die U-förmigen Spannplatten 20 bilden Aufnahmen für die U-förmige Tragschiene 10 und können an dieser begrenzt axial verstellt werden, wenn die in den Langlöchern 12 geführten und mit den Spannplatten 20 verschraubten Spannschrauben 50 die Spannplatten 20 an der Tragschiene 10 vorbereitend festhalten. Die den Rahmenschenkeln 30 oder den Montageplatten 40 zugekehrten Stirnseiten des Basisschenkels 23 der Spannplatten 20 sind mit zwei Haltekrallen 21 versehen, die ähnlich wie die Einhängehaken 11 der Tragschiene 10 gestaltet und in die Befestigungsdurchbrüche 33 der Befestigungsseite 32 des Rahmenschenkels 30 eingeführt werden können und dabei diese Befestigungsseite 32 hintergreifen. Erfolgt die Befestigung der Tragschiene 10 an der Montageplatte 40, dann hintergreifen die Haltekrallen 21 der Spannplatten 20 den Haltesteg 41. Die Haltekrallen 21 sind entsprechend gegenüber der Aufnahmeseite der Spannplatte 20 für die Tragschiene 10 nach hinten abgebogen.

Wird die Spannschraube 50 angezogen, dann wird die Rückseite der Tragschiene 10 im Bereich ihrer Enden gegen die Befestigungsseite 31 des Rahmenschenkels 30 oder gegen die Vorderseite der Montageplatte 40 verspannt. Die Spannplatten 20 werden gegen die Rückseite der Tragschiene 10 gezogen, wobei die Haltekrallen 21 sich in den Befestigungsdurchbrüchen 33 der Befestigungsseite 32 des Rahmenschenkels 30 oder auf dem Haltesteg 41 der Montageplatte 40 abstützen. Dies führt zu einer stabilen Befestigung der Tragschiene 10, wozu pro Ende derselben nur eine einzige Spannschraube 50 erforderlich ist.

Die Tragschiene 10 bildet mit den beiden Spannplatten 20 eine vormontierte Einheit, da die Spannschrauben 50 die Spannplatten 20 an der Tragschiene 10 festhalten. Nach dem Einhängen dieser vormontierten Einheit werden die Spannplatten 20 nur noch in ihre Verbindungsstellung gebracht und die Haltekrallen 21 in Befestigungsdurchbrüche 33 eines Rahmenschenkels 30 eingeführt oder auf dem Haltesteg 41 einer Montageplatte 40 abgestützt. Mit dem Festziehen der Spannschraube 50 ist die Montage beendet.

Die den Haltekrallen 21 abgekehrte Stirnseite der identisch ausgebildeten Spannplatten 20 ist als Bedienungssteg 25 abgekantet, der das Verstellen der Spannplatten 20 entlang der Tragschiene 10 erleichtert. Die Verstellwege der Spannplatten 20 sind durch die in den Langlöchern 12 der Tragschiene 10 geführten Spannschrauben 50 begrenzt.

## Patentansprüche

1. Schaltschrank mit einer Vorrichtung zum Befestigen einer Tragschiene (10) an Rahmenschenkeln (30) und/oder Montageplatten (40), wobei die Rahmenschenkel (30) zwei senkrecht zueinander stehende Befestigungsseiten (31, 32) mit jeweils einer Reihe von Befestigungsdurchbrüchen (33) aufweisen und die Montageplatte (40) im Bereich einer Seitenkante eine Reihe von Befestigungsdurchbrüchen (42) und einen abgekanteten Haltesteg (41) aufweist und bei der die Tragschiene (10) an beiden Enden mit Befestigungselementen versehen ist, die zur Verbindung mit einem Rahmenschenkel (30) oder einer Montageplatte (40) dienen,
**dadurch gekennzeichnet,**
**dass** die Befestigungselemente der Tragschiene (10) als Einhängehaken (11) ausgebildet sind, die in ihrer Breite an die Seitenlänge der im Querschnitt quadratischen Befestigungsdurchbrüche (33,42) der Rahmenschenkel (30) oder der Montageplatte (40) angepasst sind, in die Befestigungsdurchbrüche (33,42) einführbar sind und den Rahmenschenkel (30) oder die Montageplatte (40) hintergreifen,
**dass** jedem Ende der Tragschiene (10) eine Spannplatte (20) zugeordnet ist, die an einer Kante mit Haltekrallen (21) versehen ist,
**dass** diese Haltekrallen (21) in Befestigungsdurchbrüche (33) der senkrecht zu der belegten Rahmenschenkelseite (31) stehenden Rahmenschenkelseite (32) einführbar sind und diese hintergreifen oder den Haltesteg (41) der Montageplatte (40) hintergreifen, und
**dass** die Spannplatte (20) mit einer Gewindebohrung (22) für eine Spannschraube (50) versehen ist, mit der sie in einem in Längsrichtung der Tragschiene (10) verlaufenden Langloch (12) an der Tragschiene (10) gehalten und in der Verbindungsstellung mit dieser verspannbar ist.

2. Schaltschrank nach Anspruch 1,
**dadurch gekennzeichnet,**
**dass** die Tragschiene (10) mit einem Basisschenkel (13) und zwei Seitenschenkeln (14) im Querschnitt U-förmig ausgebildet ist und
**dass** die Spannplatte (20) mit einem Basisschenkel (23) und zwei Seitenschenkeln (24) im Querschnitt U-förmig gestaltet sind, eine Aufnahme für die Tragschiene (10) bilden und in Längsrichtung an dieser vorstellbar sind.

3. Schaltschrank nach Anspruch 2,
**dadurch gekennzeichnet,**
**dass** die Befestigungsdurchbrüche (33) in den beiden Befestigungsseiten (31,32) der Rahmenschenkel (30) in gleichem Abstand zu der von diesen gebildeten Rahmenkante (35) angeordnet sind und
**dass** die Breite des Haltesteges (41) der Montageplatte (40) diesem Abstand entspricht.

4. Schaltschrank nach Anspruch 2,
**dadurch gekennzeichnet,**
**dass** die Seitenschenkel (14) der Tragschiene (10) in senkrecht dazu abgekantete und gegeneinander gerichtete Halteschenkel (15) auslaufen.

5. Schaltschrank nach einem der Ansprüche 1 bis 4,
**dadurch gekennzeichnet,**
**dass** die Haltekrallen (21) der U-förmigen Spannplatten (20) an einer Stirnseite des Basisschenkels (23) angebracht sind, und
**dass** die Haltekrallen (21) entsprechend dem Abstand der Befestigungsdurchbrüche (33) der Rahmenschenkel (30) von der Rahmenkante (35) und damit auch die Breite des Haltesteges (41) der Montageplatte (40) an dem Basisschenkel (23) der Spannplatten (20) abgebogen sind.

6. Schaltschrank nach einem der Ansprüche 1 bis 5,
**dadurch gekennzeichnet,**
**dass** die Tragschiene (10) und die Spannplatten (20) in Querrichtung zur Tragschiene (10) zwei Einhängehaken (11) bzw. zwei Haltekrallen (21) aufweisen, deren Abstand an die Teilung der Reihen von Befestigungsdurchbrüchen (33,42) in den Rahmenschenkeln (30) und Montageplatten (40) angepasst ist.

7. Schaltschrank nach einem der Ansprüche 2 bis 6,
**dadurch gekennzeichnet,**
**dass** die Spannplatten (20) an der den Haltekrallen (21) gegenüberliegenden Stirnseiten des Basisschenkels (23) mit einem abgekanteten Bedienungssteg (25) versehen sind.

## Claims

1. Switch cabinet having a device for fastening a carrying rail (10) on frame legs (30) and/or installation panels (40), it being the case that the frame legs (30) have two fastening sides (31, 32) which are located perpendicularly in relation to one another, and each have a series of fastening apertures (33), and the installation panel (40), in the region of one side edge, has a series of fastening apertures (42) and an angled retaining crosspiece (41), and in the case of which the carrying rail (10) is provided, at both ends, with fastening elements which serve for connection to a frame leg (30) or an installation panel (40), **characterized in that** the fastening elements of the carrying rail (10) are designed as suspension hooks (11) which are adapted in width to the side lengths of the cross-sectionally square fastening apertures (33, 42) of the frame leg (30) or of the. installation panel (40), can be introduced into the fastening apertures (33, 42) and engage behind the frame leg (30) or the installation panel (40), **in that** each end of the carrying rail (10) is assigned a clamping plate (20), which is provided with retaining claws (21) on one edge, **in that** these retaining claws (21) can be introduced into fastening apertures (33) of the frame-leg side (32), located perpendicularly to the occupied frame-leg side (31), and engage behind the frame or engage behind the retaining crosspiece (41) of the installation panel (40), and **in that** the clamping plate (20) is provided with a threaded bore (22) for a clamping screw (50), by means of which it is retained on the carrying rail (10), in a slot (12) running in a longitudinal direction of the carrying rail (10), and can be braced therewith in the connecting position.

2. Switch cabinet according to Claim 1, **characterized in that** the carrying rail (10), with a base leg (13) and two side legs (14), is of cross-sectionally U-shaped design, and **in that** the clamping plates (20), with a base leg (23) and two side legs (24), are of cross-sectionally U-shaped configuration, form a mount for the carrying rail (10) and can be adjusted in the longitudinal direction thereon.

3. Switch cabinet according to Claim 2, **characterized in that** the fastening apertures (33) in the two fastening sides (31, 32) of the frame leg (30) are arranged at an equal spacing in relation to the frame edge (35) formed thereby, and **in that** the width of the retaining crosspiece (41) of the installation panel (40) corresponds to this spacing.

4. Switch cabinet according to Claim 2, **characterized in that** the side legs (14) of the carrying rail (10) terminate in retaining legs (15) which are angled perpendicularly in relation to the carrying rail and are directed towards one another.

5. Switch cabinet according to one of Claims 1 to 4, **characterized in that** the retaining claws (21) of the U-shaped clamping plate (20) are fitted on an end side of the base leg (23), and **in that** the retaining claws (21) are bent from the base leg (23) of the clamping plates (20) in accordance with the spacing of the fastening apertures (33) of the frame legs (30) from the frame edge (35) and thus also the width of the retaining crosspiece (41) of the installation panel (40).

6. Switch cabinet according to one of Claims 1 to 5, **characterized in that** the carrying rail (10) and the clamping plates (20) have, in the transverse direction in relation to the carrying rail (10), two suspension hooks (11) and two retaining claws (21), respectively, the spacing of which is adapted to the spacing of the series of fastening apertures (33, 42) in the frame legs (30) and installation panels (40).

7. Switch cabinet according to one of Claims 2 to 6, **characterized in that**, on the end sides of the base leg (23) which are located opposite the retaining claws (21), the clamping plates (20) are provided with an angled operating crosspiece (25).

## Revendications

1. Armoire de distribution comprenant un dispositif pour fixer un rail support (10) sur des montants de cadre (30) et/ou des platines de montage (40), les montants de cadre (30) présentant deux côtés de fixation (31, 32) perpendiculaires l'un à l'autre avec à chaque fois une rangée d'ouvertures de fixation (33) et la platine de montage (40) présentant, dans la région d'une arête latérale, une rangée d'ouvertures de fixation (42) et une nervure de fixation (41) coudée et où le rail support (10) est pourvu aux deux extrémités d'éléments de fixation qui servent à l'assemblage avec un montant de cadre (30) ou une platine de montage (40),
**caractérisée en ce que**
les éléments de fixation du rail support (10) sont réalisés sous forme de crochets d'accrochage (11) dont la largeur est adaptée à la longueur latérale des ouvertures de fixation (33, 42) de section transversale quadratique des montants de cadre (30) ou de la platine de montage (40), qui peuvent être introduits dans les ouvertures de fixation (33, 42) et qui viennent en prise par l'arrière avec le montant de cadre (30) ou la platine de montage (40),
**en ce que** l'on associe à chaque extrémité du rail support (10) une platine de serrage (20) qui est pourvue sur une arête de griffes de fixation (21),
**en ce que** ces griffes de fixation (21) peuvent être introduites dans les ouvertures de fixation (33) du côté du montant de cadre (32) perpendiculaire au côté du montant de cadre (31) garni, et viennent en prise par l'arrière avec celui-ci ou viennent en prise par l'arrière avec la nervure de fixation (41) de la platine de montage (40) et
**en ce que** la platine de serrage (20) est pourvue d'un alésage fileté (22) pour une vis de serrage (50) avec laquelle elle est maintenue dans un trou oblong (12) s'étendant dans la direction longitudinale du rail support (10) contre le rail support (10) et peut être serrée avec celui-ci dans la position d'assemblage.

2. Armoire de distribution selon la revendication 1,
**caractérisée en ce que** le rail support (10) est réalisé avec un montant de base (13) et deux montants latéraux (14) avec une forme en U en section transversale et **en ce que** les platines de serrage (20) sont réalisées avec un montant de base (23) et deux montants latéraux (24) avec une forme en U en section transversale, forment un logement pour le rail support (10) et peuvent coulisser sur celui-ci dans la direction longitudinale.

3. Armoire de distribution selon la revendication 2,
**caractérisée en ce que**
les ouvertures de fixation (33) dans les deux côtés de fixation (31, 32) des montants de cadre (30) sont disposées à égale distance par rapport à l'arête de cadre (35) formée par ceux-ci et **en ce que** la largeur de la nervure de fixation (41) de la platine de montage (40) correspond à cette distance.

4. Armoire de distribution selon la revendication 2,
**caractérisée en ce que**
les montants latéraux (14) du rail support (10) se prolongent par des montants de fixation (15) coudés et orientés l'un vers l'autre, orientés perpendiculairement à ceux-ci.

5. Armoire de distribution selon l'une quelconque des revendications 1 à 4,
**caractérisée en ce que**
les griffes de fixation (21) des platines de serrage en forme de U (20) sont montées sur un côté frontal du montant de base (23) et **en ce que** les griffes de fixation (21) sont recourbées en fonction de la distance des ouvertures de fixation (33) des montants de cadre (30) depuis l'arête du cadre (35) et donc également de la largeur de la nervure de fixation (41) de la platine de montage (40) sur le montant de base (23) des platines de serrage (20).

6. Armoire de distribution selon l'une quelconque des revendications 1 à 5,
**caractérisée en ce que**
le rail support (10) et les platines de serrage (20) présentent, dans la direction transversale par rapport au rail support (10), deux crochets d'accrochage (11), respectivement deux griffes de fixation (21) dont la distance est adaptée à la division des rangées d'ouvertures de fixation (33, 42) dans les montants de cadre (30) et les platines de montage (40).

7. Armoire de distribution selon l'une quelconque des revendications 2 à 6,
**caractérisée en ce que**
les platines de serrage (20) sont pourvues, sur les côtés frontaux du montant de base (23) opposés aux griffes de fixation (21), d'une nervure de commande coudée (25).
